# EUROPEAN PATENT SPECIFICATION

(11) **EP 0 947 141 B1**
(45) Date of publication and mention of the grant of the patent: **13.10.2004**
(21) Application number: 98830203.0
(22) Date of filing: 02.04.1998
(51) Int. Cl.: A23G 3/00, A21D 13/08

(54) **Composite confectionery product**
Komposit-Konfektprodukt
Produit de confiserie composite

(43) Date of publication of application: 06.10.1999
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Cavalli, Moreno, 12051 Alba (Cuneo) (IT)
(74) Representative: Rambelli, Paolo

(56) References cited:
- EP-A- 0 775 446
- DE-U- 29 501 313
- FR-A- 451 640
- FR-A- 2 744 593
- US-A- 4 298 625

## Description

The present invention relates to a confectionery product of the type generally known by the term "small cake", comprising a first and a second layer of a bakery product, typically risen sponge cake, between which a layer of filling cream is interposed as in a sandwich.

Products of the type mentioned above typically comprise a cream constituted by an oil-in-water or water-in-oil emulsion based on pasteurized milk and derivatives thereof.

United States patent No. 4,298,625 describes a filling cream for bakery products in the form of a foamed oil-in-water emulsion which can be produced with the use of condensed milk.

United States patent No. 4,855,155 describes a food composition usable as a filling for bakery products produced with the use of fresh cheese (quark) or yoghurt and with the use of condensed whole milk.

EP-A-0 818 149 describes an aerated food composition comprising fats, milk proteins and possibly sugars, which has an acid pH and can be produced with the use of fresh cheese, yoghurt or sour cream.

FR-2 744 593 describes a sandwich-like confectionery product, in which 2 cream layers are separated by a chocolate tablet.

In order to improve the organoleptic characteristics and the attractiveness of the product, the filling cream may include other ingredients such as, for example, cocoa. Cakes of the type mentioned above and having an outer coating of solid chocolate are also known. The introduction of a solid chocolate coating is desirable since, as well as introducing a further flavour element, it provides to the essentially soft product constituted by sponge cake and filling cream, a certain resistance to chewing so that the product becomes to a certain extent "crunchy".

However, external coating with a thin layer of chocolate or the like leads to problems both during industrial production and for the consumer upon consumption. On the one hand, it is in fact difficult to produce a coating having good aesthetic characteristics since the chocolate which is applied to the product in the molten state may overflow from the faces of the bakery product to which it is applied; the chocolate applied externally may easily become softened or melt if the product is exposed to temperatures higher than normal refrigeration temperatures, resulting in soiling of the packaging wrapper and a clearly impaired appearance when the package is opened. Moreover, since the product is generally eaten in the manner of a sandwich, the outer layer of chocolate generally soils the consumer's hands or breaks into flakes.

If the filled cakes to which the invention relates comprise layers of filling cream having different organoleptic characteristics such as, for example, a milk and a cocoa cream, a further problem which has been encountered relates to the variation of the consistency of the two creams in contact over time. Typically, the cream containing milk and cocoa tends to harden more quickly than the milk-based cream and this leads to a troublesome sensation of non-homogeneity of the filling upon consumption.

In order to prevent the aforementioned problems, the subject of the present invention is a confectionery product according to claim 1.

Further characteristics and advantages of the confectionery product according to the invention will become clear from the following detailed description, given with reference to the appended drawings, in which:
Figure 1 is a perspective view of a confectionery product according to the invention, and
Figure 2 is a front elevational view of another embodiment of the confectionery product.

With reference to the drawings, a confectionery product or cake, generally indicated 2, comprises a layer 4 and a layer 6 of sponge cake. With particular reference to products produced on an industrial scale, the two layers of sponge cake are generally quadrangular, preferably square or rectangular, in shape, but the shape is not intended to constitute a limiting aspect.

The sponge cake is produced by conventional mixture-preparation and baking methods; however, the mixture used according to the invention preferably comprises wheat germ as an ingredient. A filling cream, generally indicated 8, is interposed between the two layers of sponge cake and a thin layer 10 of chocolate which is obtained by metering molten chocolate, and which is solid at ambient temperature is disposed therein

The term chocolate used in the present description is intended to define, in its most general meaning, a mixture comprising cocoa, sugar, possibly cocoa butter, powdered milk and other flavouring components and is not intended to be limited to the legal definition of this product.

According to the invention, the thin chocolate layer 10 extends over the entire length of the layers of sponge cake and is confined laterally by two strips 12 and 14 of filling cream which extend along the facing longitudinal sides of the layers of sponge cake.

The chocolate layer 10 has its upper and lower faces in contact with the filling cream disposed in intermediate regions indicated 16a and 16b. In this embodiment, the chocolate layer is visible on the two front and rear faces of the cake.

In another embodiment, not shown, the chocolate layer 10 is confined by the filling cream on all sides.

In a preferred embodiment, the filling cream in the central regions 16a and 16b which are in contact with the upper and lower faces of the layer 10 has a composition and organoleptic characteristics different from the filling cream deposited in longitudinal strips 12 and 14. Thus, for example, the filling cream in the central regions 16a and 16b is a milk cream and the filling cream in one or in both of the regions 12 or 14, is a milk cream containing cocoa or other ingredients which modify its organoleptic characteristics, such as coconut, coffee, etc., or vice versa.

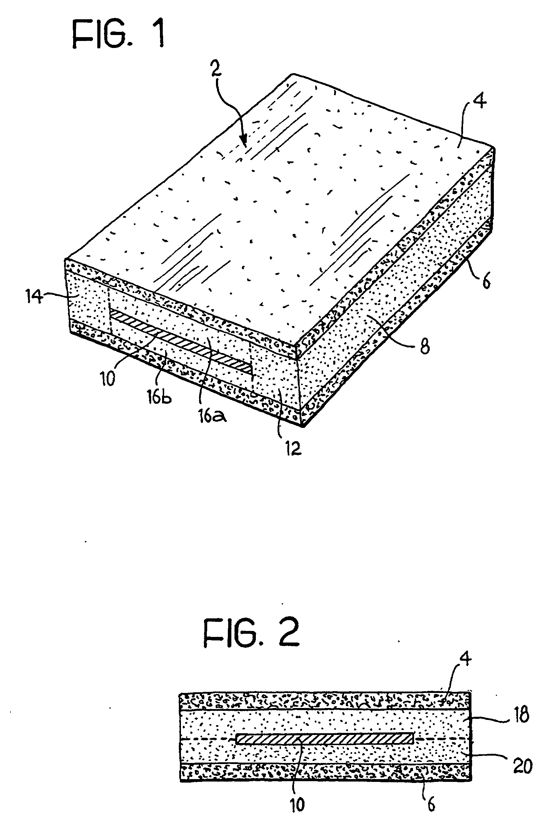

In another embodiment, shown in Figure 2, the filling is formed by two cream layers 18 and 20 having different compositions and organoleptic characteristics.

The composition of the filling cream may vary within wide limits. It is preferably an aerated oil-in-water emulsion; water-in-oil emulsions should not, however, be excluded. Typically, the filling cream comprises:
- water 10-35%, preferably 25-29%
- total fats 25-55%, preferably 27-30%
- total sugars 25-40%, preferably 30-35%
- total proteins 3-8%, preferably 5.5-7.5%.

The percentages mentioned above and all of the percentages given in the following portion of the present description are expressed as percentages by weight unless specifically indicated otherwise.

The cream preferably also comprises mono- and di- glycerides, typically in quantities of from 0.1 to 1% by weight, and preferably has a pH of between 5.8 and 7.5.

Other preferred characteristics of the cream comprise:
- a specific weight, upon being metered out, of from 0.50 g/cm³ to 0.8 g/cm³, preferably about 0.6 g/cm³;
- a viscosity of the mixture, before pasteurization, of from 200 to 5000 cps (Brookfield viscosimeter, probe No. 5, 65°C), preferably about 500-700 cps;
- a Stevens penetrometry value, upon being metered out, of from 100 g to 1000 g, preferably about 200-300 g (conical probe, 60°C).

The cream preferably contains an inert gas, typically nitrogen, in the form of an intimately dispersed gaseous phase, generally in a proportion of from 20 to 50% by volume, preferably from 30 to 40% by volume, relative to the volume of the product.
The basic ingredient of the cream preparation is milk or derivatives thereof. The milk may be supplied as pasteurized fresh milk, UHT milk, condensed milk, powdered milk or rehydrated milk; the use of milk derivatives such as cows'-milk cream, fresh cheese (quark), yoghurt, or protein concentrates is not, however, excluded.

The fats present in the cream composition are derived from milk and its derivatives and may also comprise added fats, particularly cows'-milk butter or vegetable fats, possibly, but not preferably, hydrogenated vegetable fats.

The sugars comprise monosaccharides (such as fructose and glucose), invert sugar, disaccharides (such as lactose and sucrose), complex carbohydrates, fibre, honey, polyalcohols and mixtures thereof.

In the preferred embodiment in which the product comprises two or more layers of filling cream in contact with one another, one of the creams preferably comprises cocoa, typically at a concentration of from 1 to 10% by weight.

It has been found that the presence of cocoa in the cream substantially modifies its consistency over time in comparison with the consistency of a similar milk-based cream. This phenomenon may cause an undesirable sensation of non-homogeneity which is perceptible to the consumer upon consumption, and is caused by progressive hardening of the cream containing cocoa over time.

This problem is limited with the use of filling cream compositions which have in terms of moisture, protein content, fats and protein content within the above-mentioned preferred ranges.
It is also preferable if the sugars used in the cocoa cream which is in contact with a corresponding milk cream comprise a quantity of from 3 to 9% by weight of an invert sugar or a mixture of glucose and fructose, whereas the sugars of the corresponding milk cream comprise substantially no invert sugar or mixtures of glucose and fructose.

Preferred proportions of the ingredients used in the preparation of the creams are given by way of non- limiting example below:
milk cream
   - whole, pasteurized, fresh milk 30%
   - sucrose 24%
   - vegetable fat 21%
   - spray skimmed milk 16.5%
   - anhydrous cows'-milk butter 6%
   - mono- and di-glycerides 0.6%
   - flavourings as required
cocoa cream
   - whole, pasteurized, fresh milk 30%
   - sucrose 17.7%
   - vegetable fat 20.5%
   - spray skimmed milk 12.5%
   - invert sugar 7%
   - anhydrous cows'-milk butter 6%
   - reduced-fat cocoa 4%
   - mono- and di-glycerides 0.6%
   - flavourings as required.

The cream may be prepared by conventional methods for the preparation of edible oil-in-water or water-in-oil emulsions. By way of example, the operative steps comprise the preparation of an oil-in-water emulsion by the preparation of an aqueous phase containing milk and/or derivatives thereof and the sugars, typically at a temperature of 55-65°C and, separately, an oily phase containing the fats.

The aqueous phase is poured into an emulsifier kept at 55-65°C and having a rotary stirrer, after which the oily phase is added gradually. The resulting "oil-in-water" emulsion may be homogenized, preferably in a continuous flow, by being passed through a homogenizer in accordance with conventional homogenization techniques.

The subsequent preparation steps comprise pasteurization, generally carried out at a temperature of 90-100°C, possibly seeding of the pasteurized emulsion with lactose microcrystals in order to control the size of the crystals to prevent grittiness, and a step for the expansion of the mixture by the introduction of inert gas. The emulsion is then cooled to a temperature below 20°C to bring about crystallization of at least some of the edible fat content.

With reference to the embodiment shown schematically in Figure 2, the method of preparing the filled cake comprises, initially, continuous metering-out of the first layer 20 of filling cream onto the layer 6 of bakery product.

The cream is typically metered out at a temperature of 5-10°C. The melted chocolate is then metered out onto the layer 20 in a thin layer in the molten state and sets and crystallizes in contact with the cold cream. The layer 18 is then metered out, when the chocolate has set. Industrially, the method is in practice carried out continuously by advancing the layer of sponge cake on a conveyor belt with which stations are associated for metering out the filling cream and the chocolate layer.

In the embodiment in which the filling cream comprises the two longitudinal strips 12 and 14 of cream having a composition and organoleptic characteristics different from the cream deposited in the intermediate regions 16a and 16b, the method of preparation comprises, first of all, the metering-out of spaced parallel strips having a thickness equal to the overall thickness of the layer of filling, onto the continuously advancing layer of bakery product; a thinner layer 16b is then metered out in the region between the two strips 12 and 14; the melted chocolate is then metered out in a thin layer.

By virtue of the presence of the lateral strips 12 and 14, the melted chocolate thus metered out in the molten state is confined and cannot overflow sideways. After the chocolate layer has set, a further layer 16a is metered out and is then covered by the second layer of bakery product 4.

Industrially, the substrate used is in practice constituted by a bakery product having a transverse width equal to a multiple of the width of the layer of bakery product constituting an individual cake.

After the filling cream has been metered out, the sponge cake substrate is cut longitudinally to the desired size.

The outer faces of the layers of sponge cake may be further coated with other confectionary ingredients such as icing sugar, chocolate and the like.

After longitudinal and then transverse cutting, the cakes thus produced are finally sent for packaging.

## Claims

1. A confectionery product comprising a first and a second layer of bakery product (4, 6) between which a layer of filling cream (8) is interposed, and a thin layer of solid chocolate (10) disposed within the filling cream (8), **characterized in that** the layer of solid chocolate (10) obtained by metering molten chocolate has its two larger faces disposed in contact with the filling cream (16a, 16b) and is at least partially confined laterally by two strips of filling cream (12, 14) which extend along the lateral edges of each layer of bakery product (4, 6).

2. A confectionery product according to Claim 1, **characterized in that** the layers of bakery product (4) have a generally quadrilateral configuration, in which the thin layer of chocolate (10) is confined laterally between a first and a second layer of filling cream (12, 14) which extend along the edges of at least two facing sides of each layer of bakery product.

3. A confectionery product according to Claim 2, **characterized in that** the lateral strips of filling cream (12, 14) are constituted by a cream having composition and organoleptic characteristics different from those of the filling cream (16a, 16b) which is in contact with the larger faces of the layer of chocolate (10).

4. A confectionery product according to Claim 3, **characterized in that** the lateral strips of filling cream (12, 14) are constituted by a milk and cocoa cream and the filling cream (16a, 16b) which is in contact with the larger faces of the chocolate layer (10) is constituted by a milk cream without cocoa.

5. A confectionery product according to any one of the preceding claims, in which the filling cream comprises:
- from 25 to 29% by weight of water,
- from 27 to 30% by weight of total fats,
- from 30 to 35% by weight of total sugars, and
- from 5.5 to 7.5% by weight of total proteins.

6. A confectionery product according to any one of the preceding claims, comprising at least two layers of filling cream in contact with one another, in which at least one of the layers comprises cocoa, **characterized in that** the layer of filling cream comprising cocoa also comprises a quantity of from 3 to 9% by weight of invert sugar or a mixture of glucose and fructose, and the layer of filling cream in contact with the layer comprising cocoa is substantially free of invert sugar or mixtures of glucose and fructose.

## Patentansprüche

1. Süsswarenprodukt, das eine erste und eine zweite Backwarenschicht (4, 6) mit einer dazwischen befindlichen Füllungscremeschicht (8) und eine dünne Schicht aus fester Schokolade (10), die innerhalb der Füllungscreme (8) angeordnet ist, umfasst, **dadurch gekennzeichnet, dass** die Schicht aus fester Schokolade (10), die erhalten wird durch Dosierung geschmolzener Schokolade, mit ihren beiden grösseren Flächen in Kontakt mit der Füllungscreme (16a, 16b) angeordnet ist und zumindest teilweise durch zwei Streifen aus Füllungscreme (12, 14), die sich entlang der seitlichen Kanten jeder Backwarenschicht (4, 6) erstrecken, seitlich begrenzt ist.

2. Süsswarenprodukt gemäss Anspruch 1, **dadurch gekennzeichnet, dass** die Backwarenschichten (4) eine im allgemeinen viereckige Ausgestaltung aufweisen, worin die dünne Schicht aus Schokolade (10) zwischen einer ersten und einer zweiten Füllungscremeschicht (12, 14), die sich entlang der Kanten von mindestens zwei gegenüberliegenden Seiten jeder Backwarenschicht erstrecken, seitlich begrenzt ist.

3. Süsswarenprodukt gemäss Anspruch 2, **dadurch gekennzeichnet, dass** die seitlichen Streifen aus Füllungscreme (12, 14) durch eine Creme mit einer Zusammensetzung und organoleptischen Eigenschaften gebildet werden, die von denjenigen der Füllungscreme (16a, 16b), die in Kontakt mit den grösseren Flächen der Schokoladenschicht (10) steht, unterschiedlich sind.

4. Süsswarenprodukt gemäss Anspruch 3, **dadurch gekennzeichnet, dass** die seitlichen Füllungscremestreifen (12, 14) durch eine Milch- und Kakaocreme gebildet werden, und die Füllungscreme (16a, 16b), die mit den grösseren Flächen der Schokoladenschicht (10) in Kontakt steht, wird durch eine Milchcreme ohne Kakao gebildet.

5. Süsswarenprodukt gemäss mindestens einem der vorhergehenden Ansprüche, worin die Füllungscreme folgendes umfasst:
25 bis 29 Gew.% Wasser,
27 bis 30 Gew.% Gesamtfett,
30 bis 35 Gew.% Gesamtzucker und
5,5 bis 7,5 Gew.% Gesamtproteine.

6. Süsswarenprodukt gemäss mindestens einem der vorhergehenden Ansprüche, die mindestens zwei Füllungscremeschichten in Kontakt miteinander umfasst, worin mindestens eine der Schichten Kakao umfasst, **dadurch gekennzeichnet, dass** die Füllungscremeschicht, die Kakao umfasst, ferner eine Menge von 3-9 Gew.% Invertzucker oder eine Mischung aus Glucose und Fructose umfasst, und die mit der Schicht, die Kakao umfasst, in Kontakt stehende Füllungscremeschicht ist im wesentlichen frei von Invertzucker oder Mischungen aus Glucose und Fructose.

## Revendications

1. Produit de confiserie comprenant une première et une deuxième couche de produit de boulangerie (4,6) entre lesquelles une couche de crème de remplissage (8) est intercalée, et une fine couche de chocolat solide (10) est disposée à l'intérieur de la crème de remplissage (8), **caractérisé en ce que** la couche de chocolat solide (10), obtenue par dosage de chocolat fondu, a ses deux faces plus larges disposées en contact avec la crème de remplissage (16a,16b) et est confinée latéralement, au moins partiellement, entre deux bandes de crème de remplissage (12,14) qui s'étendent le long des bords latéraux de chaque couche de produit de boulangerie (4,6).

2. Produit de confiserie selon la revendication 1, **caractérisé en ce que** les couches de produit de boulangerie (4) ont une configuration généralement quadrilatère, dans laquelle la fine couche de chocolat (10) est confinée latéralement entre une première et une deuxième couche de crème de remplissage (12,14) qui s'étendent le long des bords d'au moins deux côtés se faisant face de chaque couche de produit de boulangerie.

3. Produit de confiserie selon la revendication 2, **caractérisé en ce que** les bandes latérales de crème de remplissage (12,14) sont constituées d'une crème ayant une composition et des caractéristiques organoleptiques différentes de celles de la crème de remplissage (16a, 16b) qui est en contact avec les faces plus larges de la couche de chocolat (10).

4. Produit de confiserie selon la revendication 3, **caractérisé en ce que** les bandes latérales de crème de remplissage (12,14) sont constituées de lait et de crème de cacao et la crème de remplissage (16a,16b) qui est en contact avec les faces plus larges de la couche de chocolat (10) est constituée d'une crème de lait sans cacao.

5. Produit de confiserie selon l'une quelconque des revendications précédentes, dans lequel la crème de remplissage comprend :
- de 25 à 29% en poids d'eau,
- de 27 à 30% en poids au total de matières grasses,
- de 30 à 35% en poids au total de sucres, et
- de 5.5 à 7.5% en poids au total de protéines.

6. Produit de confiserie selon l'une quelconque des revendications précédentes, comprenant au moins deux couches de crème de remplissage en contact avec une autre, dans lequel l'une au moins des couches comprend du cacao, **caractérisé en ce que** la couche de crème de remplissage comprenant du cacao comprend également une quantité de 3 à 9% en poids de sucre inverti ou un mélange de glucose et de fructose, et la couche de crème de remplissage en contact avec la couche comprenant du cacao est substantiellement exempte de sucre inverti ou de mélanges de glucose et de fructose.
